# FASCICULE DE BREVET EUROPEEN

(11) **EP 1 325 853 B1**
(45) Date de publication et mention de la délivrance du brevet: **04.10.2006**
(21) Numéro de dépôt: 02028914.6
(22) Date de dépôt: 23.12.2002
(51) Int. Cl.: B60T 13/575

(54) **Servomoteur d'assistance pneumatique au freinage à embrayage unidirectionnel et à réaction réduite**
Pneumatischer Bremsservo mit reduzierter Reaktion
Pneumatic brake servo with reduced reaction

(30) Priorité: 02.01.2002 FR 0200017
(43) Date de publication de la demande: 09.07.2003
(73) Titulaire: BOSCH SISTEMAS DE FRENADO, S.L., 08080 Barcelona 6 (ES)
(72) Inventeur: Simon Bacardit, Juan, 08013 Barcelona (ES)
(74) Mandataire: Hurwic, Aleksander Wiktor

(56) Documents cités:
- EP-A- 1 053 924
- FR-A- 2 691 691
- US-A- 5 699 713

## Description

L'invention concerne un servomoteur pour un véhicule automobile.

L'invention concerne plus particulièrement un servomoteur pour un véhicule automobile, du type qui comporte un servomoteur pneumatique d'assistance au freinage actionnant un maître-cylindre, du type dans lequel le servomoteur comporte une enveloppe rigide à l'intérieur de laquelle est mobile une cloison transversale délimitant de façon étanche une chambre avant, soumise à une première pression, et une chambre arrière soumise à une deuxième pression variant entre la première pression et une pression supérieure à la première pression, du type dans lequel le servomoteur comporte un piston mobile solidaire de la cloison mobile et une tige de commande se déplaçant dans le piston sélectivement en fonction d'un effort axial d'entrée exercé vers l'avant à l'encontre d'un effort de rappel exercé sur la tige par un ressort de rappel, du type dans lequel la tige est mobile suivant une position d'actionnement intermédiaire ou une position d'actionnement extrême obtenue lorsque l'effort d'entrée est appliqué avec une vitesse supérieure à une vitesse dite de saut déterminée ou avec une intensité supérieure à une intensité dite de saut déterminée, du type dans lequel le servomoteur comporte un plongeur qui est agencé à l'avant de la tige de commande dans le piston et un clapet à trois voies qui comporte au moins un siège annulaire arrière du plongeur et qui est susceptible de faire varier la deuxième pression régnant dans la chambre arrière, notamment en mettant en communication la chambre avant et la chambre arrière lorsque la tige de commande est en position de repos ou en mettant progressivement la chambre arrière en communication avec la pression supérieure à la première pression lorsque la tige de commande est actionnée, du type dans lequel, dans la position extrême d'actionnement de la tige de commande, un palpeur monté coulissant à l'extrémité avant du plongeur est sollicité par le plongeur pour pénétrer dans un disque de réaction déformable incompressible qui est solidaire d'une tige d'actionnement du maître-cylindre, pour transmettre au plongeur et à la tige de commande l'effort de réaction du maître-cylindre, et du type dans lequel le servomoteur comporte un dispositif d'embrayage unidirectionnel qui comporte une douille coaxiale qui coulisse sur le plongeur, et une clé sensiblement annulaire qui entoure avec jeu la douille et qui est susceptible, lorsque l'effort d'entrée est appliqué avec une vitesse supérieure à la vitesse dite de saut déterminée, d'être entraînée par le piston de commande pour basculer autour d'un axe globalement transversal pour coopérer avec la périphérie de la douille et pour la bloquer dans une position axiale avant extrême dans laquelle elle bloque le palpeur indépendamment du plongeur et de la tige de commande,

De manière connue, une telle conception présente des avantages considérables en terme de sécurité lors d'une situation de freinage d'urgence.

En effet, un servomoteur conventionnel ne comporte ni palpeur indépendant, ni dispositif d'embrayage unidirectionnel du palpeur. Un tronçon d'extrémité du plongeur, formant palpeur, est susceptible de venir solliciter directement le disque de réaction solidaire de la tige d'actionnement du maître-cylindre.

Dans une situation de freinage extrême pour laquelle un effort de freinage maximal est exercé sur la tige de commande, l'actionnement de la tige du commande provoque l'actionnement du plongeur formant aussi palpeur, ce qui provoque l'ouverture maximale du clapet à trois voies de manière que la chambre arrière soit mise à la pression atmosphérique. Il s'ensuit un déplacement vers l'avant de la cloison mobile et l'extrémité du plongeur pénètre dans le disque de réaction solidaire de la face arrière du piston mobile.

Ainsi, l'effort exercé sur la tige d'actionnement du maître-cylindre lorsque la tige de commande est en fin de course résulte de l'effort d'assistance qui est provoqué par la différence de pression de chaque côté de la paroi mobile et de l'effort exercé par le plongeur formant palpeur sur ledit piston mobile. Le conducteur du véhicule ressent par ailleurs l'effort de réaction du freinage, qui est transmis du maître-cylindre au plongeur par l'intermédiaire du disque de réaction.

Le document EP 1053924 décrit un servomoteur avec un disque de réaction reçu dans une cage déformable.

Or, on a constaté que bon nombre de conducteurs, confrontés à une situation de freinage d'urgence, sous-estimaient les risques encourus, et que, après avoir freiné brutalement, ils relâchaient leur effort de freinage alors que le maintien d'un effort de freinage était indispensable pour éviter un accident.

En effet, dans le cas d'une situation de freinage extrême accompagnée d'un déplacement rapide de la tige de commande, le plongeur peut pénétrer dans le disque de réaction et transmettre au conducteur une sensation de freinage maximal, résultant de l'effort de réaction que transmet le maître-cylindre au disque de réaction, et ce avant même que la différence de pression ne soit maximale entre les chambres de pression avant et arrière, ce qui peut conduire le conducteur à relâcher son effort, quand bien même il devrait être maintenu pour bénéficier de l'effort de freinage maximal.

Pour remédier à cet inconvénient, deux types différents de solutions ont été proposés.

Un servomoteur du type de celui décrit précédemment permet de remédier à cet inconvénient en bloquant le plongeur au contact du disque de réaction à l'aide la douille et donc de maintenir un effort maximal sur la face arrière du piston mobile quand bien même le conducteur aurait partiellement relâché son effort.

Toutefois, le servomoteur du type décrit précédemment présente l'inconvénient de produire un pic d'effort de réaction dans la tige de commande du servomoteur lorsque le palpeur pénètre dans le disque de réaction, ce qui peut amener le conducteur à relâcher son effort de manière trop importante et donc de déverrouiller le dispositif d'embrayage unidirectionnel, qui ne maintient dès lors plus un effort de freinage maximal.

De plus, il a été constaté que le dispositif d'embrayage unidirectionnel n'est profitable qu'à une première catégorie de conducteurs

Selon une autre conception connue, il a été proposé un servomoteur dépourvu d'embrayage unidirectionnel mais comportant des moyens pour annihiler, en position d'actionnement extrême du palpeur, tout ou partie de l'effort de réaction qui est transmis du maître cylindre au palpeur par l'intermédiaire du disque de réaction. De tels moyens ont notamment été décrits dans le document FR-2.691.691.

Dans un tel servomoteur, l'effort de réaction transmis étant réduit, le conducteur a tendance à maintenir son effort de freinage. Cependant il a été constaté que ces moyens ne profitent qu'à une seconde catégorie de conducteurs.

Toutefois, un tel servomoteur ne comporte pas de moyens de verrouillage permettant de garantir un freinage maximal. Ainsi, un cahot ou un choc ébranlant le véhicule peut conduire le conducteur à relâcher son effort de freinage.

L'invention propose donc un servomoteur combinant les avantages de ces deux conceptions en proposant un servomoteur comportant un dispositif d'embrayage unidirectionnel propre à garantir l'application d'un effort de freinage maximal et comportant des moyens de réduction de l'effort de réaction qui est transmis du maître cylindre au palpeur par l'intermédiaire du disque de réaction et ne nécessitant que des modifications limitées des éléments constitutifs du servomoteur.

Dans ce but, l'invention propose un servomoteur du type décrit précédemment, caractérisé en ce que le disque de réaction est reçu dans une cage déformable, qui est susceptible lorsque l'effort d'entrée est appliqué avec une intensité supérieure à un intensité prédéterminée de se déformer pour réduire l'effort de réaction transmis au palpeur par l'intermédiaire de la face arrière du disque de réaction.

Selon d'autres caractéristiques de l'invention :
- la cage :
   est fixée à la tige d'actionnement du maître-cylindre, et dont au moins une paroi mobile est susceptible, lorsque l'effort d'entrée est appliquée avec l'intensité déterminée, de se déplacer pour créer dans la cage un volume supplémentaire dans lequel une partie avant du disque de réaction est susceptible de s'expandre pour réduire l'effort de
   réaction transmis au palpeur par l'intermédiaire de la face arrière du disque de réaction.
- la cage comporte :
   - un tronçon tubulaire arrière, qui est d'un premier diamètre intérieur déterminé correspondant au diamètre du disque de réaction cylindrique qu'il reçoit, et qui est ouvert vers l'arrière,
   - un tronçon tubulaire avant, qui est d'un deuxième diamètre intérieur déterminé inférieur au premier diamètre, qui est fermé à l'avant, et qui est lié à la tige d'actionnement du maître cylindre,
   - une rondelle rigide de butée, interposée avec jeu dans le tronçon tubulaire arrière entre le disque de réaction et une face d'épaulement qui délimite le tronçon tubulaire avant et le tronçon tubulaire arrière, et qui comporte un perçage d'un troisième diamètre intérieur déterminé inférieur au deuxième diamètre,
   - un poussoir mobile, dont un tronçon avant est monté coulissant avec jeu et est rappelé élastiquement vers l'arrière dans le tronçon tubulaire avant, dont une collerette externe prend appui sur une face avant de la rondelle rigide, dont un tronçon arrière traverse le perçage de la rondelle rigide de butée et dont une face arrière, agencée au contact du disque de réaction, forme la paroi mobile de la cage.
- la cage comporte :
   - un tronçon tubulaire arrière qui est d'un premier diamètre intérieur déterminé correspondant au diamètre du palpeur qu'il reçoit, et qui ouvert vers l'arrière,
   - un tronçon tubulaire intermédiaire déformable élastiquement, qui est venu de matière avec le tronçon tubulaire arrière et qui est d'un deuxième diamètre intérieur déterminé correspondant au diamètre du disque de réaction qu'il enserre sans jeu entre deux faces transversales annulaires opposées,
   - un tronçon tubulaire avant d'un troisième diamètre intérieur déterminé, qui est venu de matière avec le tronçon tubulaire intermédiaire, qui est ouvert à l'avant,
   - un poussoir tubulaire avant, qui est fermé à l'avant et à l'arrière, dont une partie avant est liée à la tige d'actionnement du maître cylindre et comporte un épaulement d'appui sur le tronçon tubulaire avant, et dont une partie arrière, de diamètre extérieur correspondant au troisième diamètre intérieur déterminé, est montée coulissante dans le tronçon tubulaire avant et comporte une face arrière, agencée au contact du disque de réaction, qui forme la paroi mobile de la cage.
- le disque de réaction est réalisé en un matériau élastomère,
- lors de la fabrication du servomoteur , le matériau élastomère du disque de réaction est vulcanisé dans le tronçon tubulaire intermédiaire de la cage de manière à adhérer avec ledit tronçon tubulaire intermédiaire,
- le palpeur est monté coulissant dans un alésage avant complémentaire du piston,
- la douille est montée coulissante dans un alésage arrière du piston qui est d'un diamètre supérieur à son alésage avant,
- des moyens élastiques sont interposés entre un épaulement arrière du palpeur et une face avant de la douille pour rappeler la douille axialement vers l'arrière en butée contre le plongeur,
- un tronçon d'extrémité libre avant du plongeur est monté coulissant dans un alésage du palpeur, un tronçon intermédiaire du plongeur est monté dans un alésage intermédiaire de la douille, et un tronçon arrière du plongeur est monté dans un alésage arrière de la douille pour solliciter le palpeur par l'intermédiaire de la douille dans la position extrême d'actionnement de la tige de commande,
- la clé est reçue avec jeu entre deux parois avant et arrière d'un évidement qui traverse le piston perpendiculairement par rapport à son axe et elle comporte :
   - un anneau central qui est traversé par la douille et qui est destiné à bloquer la douille par coincement,
   - une branche verticale inférieure, qui s'étend à partir de l'anneau et qui est destinée à prendre appui sur un élément fixe de l'enveloppe dans la position de repos de la clé,
   - une branche verticale supérieure, qui s'étend à partir de l'anneau, qui est rappelée élastiquement vers l'arrière par l'intermédiaire d'un ressort en appui contre la paroi avant de l'évidement, et qui est destinée à prendre appui sur la paroi arrière de l'évidement dans la position de repos de la clé.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'ensemble d'un servomoteur selon un premier mode de réalisation de l'invention ;
- la figure 2 est une vue de détail du servomoteur de la figure 1 représenté en position de repos de la tige de commande ;
- la figure 3 est une vue de détail du servomoteur de la figure 1 représenté en position d'actionnement extrême de la tige de commande ;
- la figure 4 est une vue en coupe axiale d'ensemble d'un servomoteur selon un second mode de réalisation de l'invention ;
- la figure 5 est une vue de détail du servomoteur de la figure 4 représenté en position de repos de la tige de commande ;
- la figure 6 est une vue de détail du servomoteur de la figure 6 représenté en position d'actionnement extrême de la tige de commande.

Dans la description qui va suivre, des chiffres de référence identiques désignent des pièces identiques ou ayant des fonctions similaires.

Par convention, les termes "avant", "arrière", supérieur", "inférieur" désignent respectivement des éléments ou des positions orientés respectivement vers la gauche, la droite, le haut, ou le bas des figures.

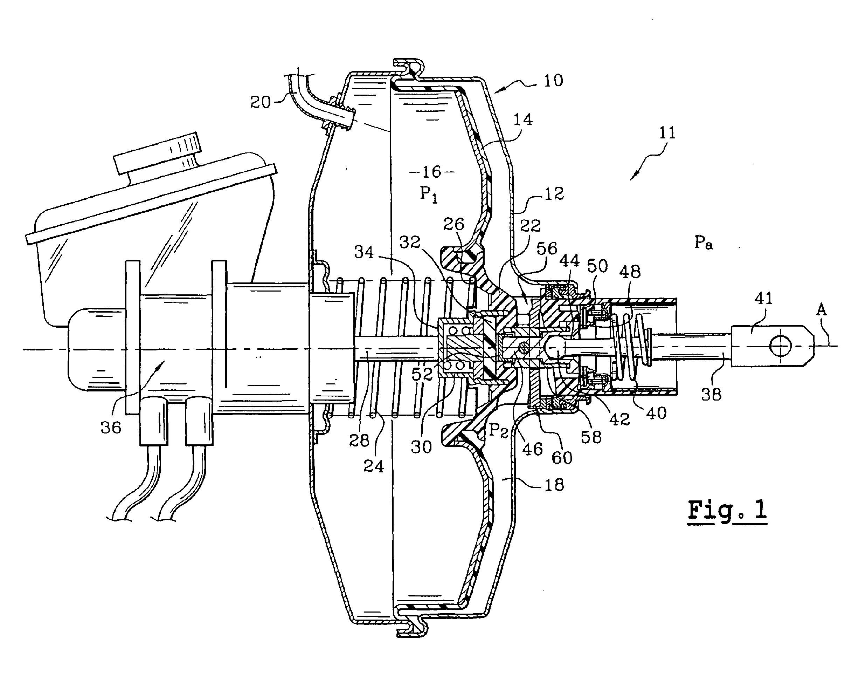

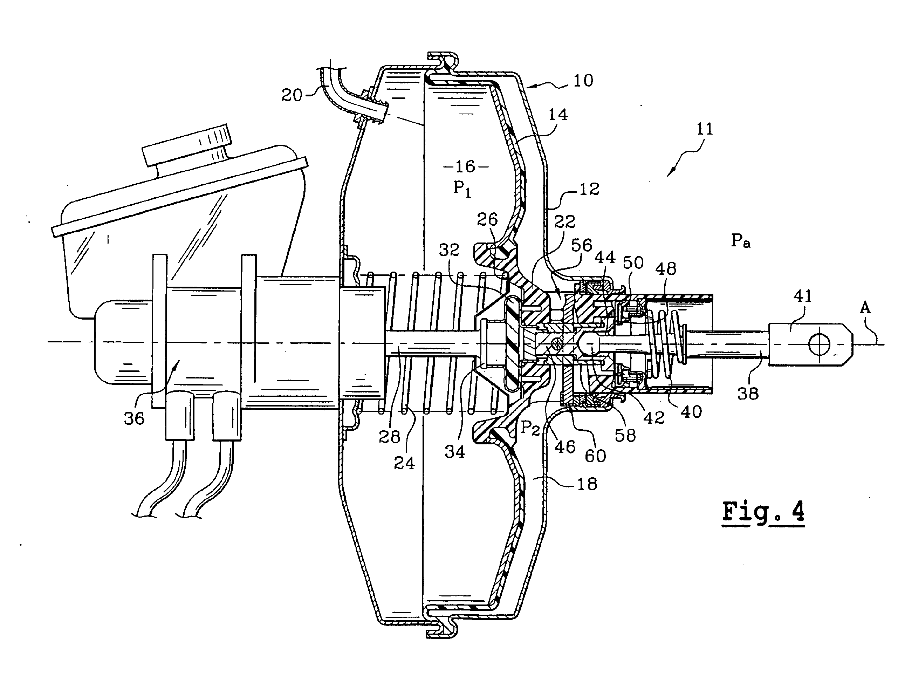

On a représenté aux la figures 1 et 4 des premier et second modes de réalisation d'un servomoteur 11 conventionnel d'assistance au freinage pour un véhicule automobile.

De manière connue, le servomoteur 11 comporte un servomoteur 10 pneumatique arrière d'assistance au freinage qui est destiné à actionner un maître-cylindre 36 avant.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P₁", et une chambre arrière 18 soumise à une deuxième pression "P₂" variant entre la première pression "P₁" et une pression "Pₐ", supérieure à la première pression "P₁".

La première pression "P₁" correspond notamment à une première pression "P₁" dite "de dépression" qui est fournie par une source de dépression, c'est à dire, dans le cas d'un véhicule à moteur à allumage commandé, par une tubulure d'admission du moteur du véhicule, ou bien, dans le cas d'un véhicule à moteur diesel ou électrique, par une pompe à vide. La pression "Pₐ", qui est supérieure à la première pression "P₁", correspond notamment à la pression atmosphérique "Pₐ".

Dans les modes de réalisation préférés de l'invention, la chambre avant 16 est alimentée en pression "P₁" par l'intermédiaire d'un conduit 20 de dépression qui est relié à la source de dépression du véhicule.

Le servomoteur pneumatique 10 comporte un piston mobile 22 qui est solidaire de la cloison mobile 14. A l'intérieur de l'enveloppe 12, la cloison mobile 14 est rappelée élastiquement vers l'arrière par un ressort 24 de rappel qui prend appui sur l'enveloppe 12 et sur une face avant 26 du piston mobile 22. La face avant 26 du piston mobile 22 est en appui contre une cage 30 à l'intérieur de laquelle est agencé, comme on le verra plus loin, un disque de réaction 32 déformable incompressible qui est notamment réalisé en un matériau élastomère.

Une face avant 34 de la cage 30 de réaction est solidaire d'une tige d'actionnement 28, qui par conséquent est solidaire des déplacements du piston mobile 22, et qui permet l'actionnement du maître-cylindre 36 hydraulique de freinage du véhicule.

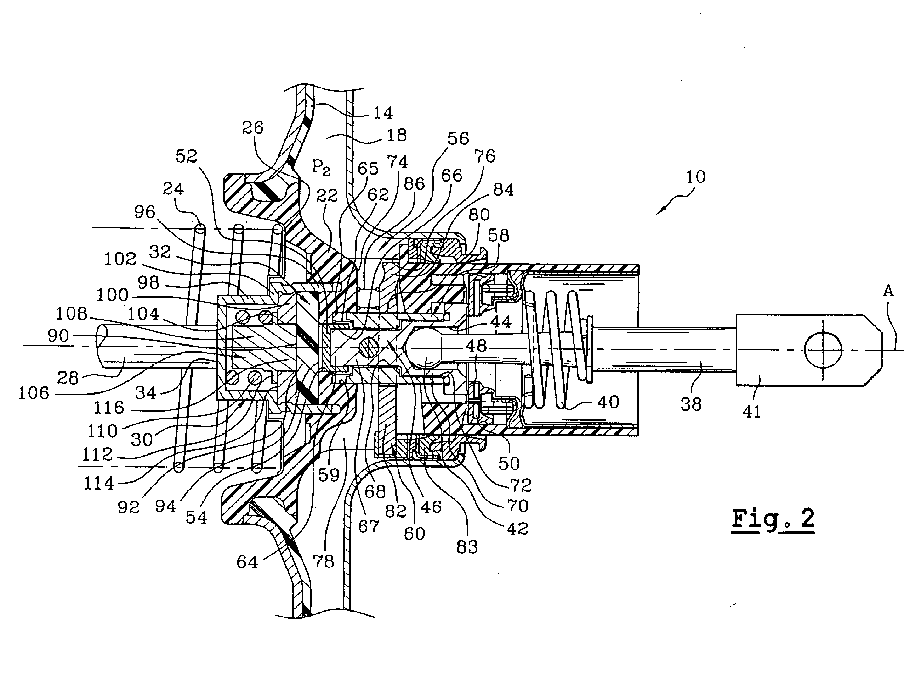

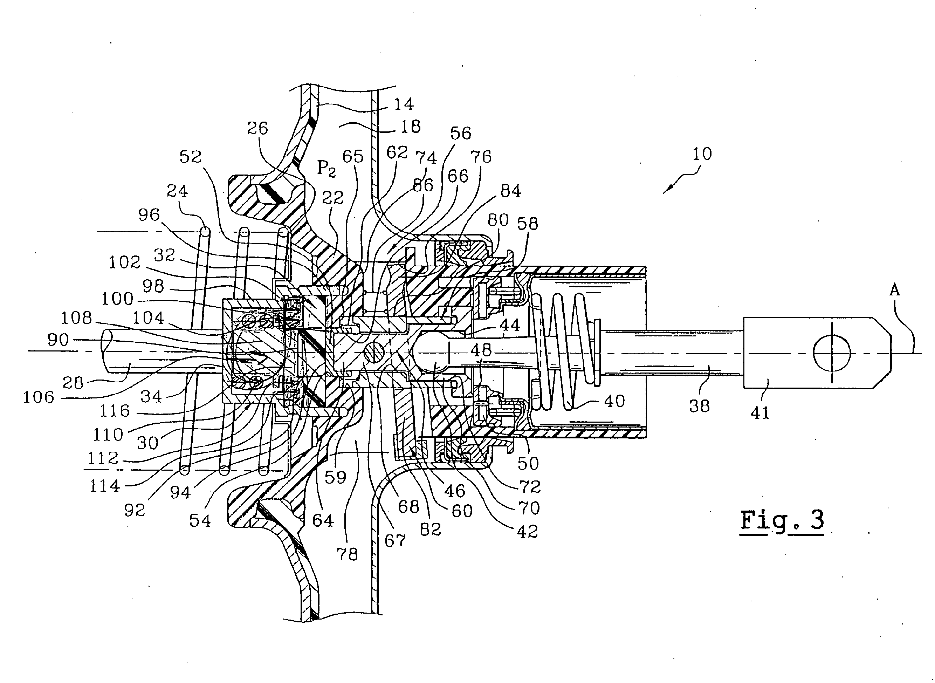

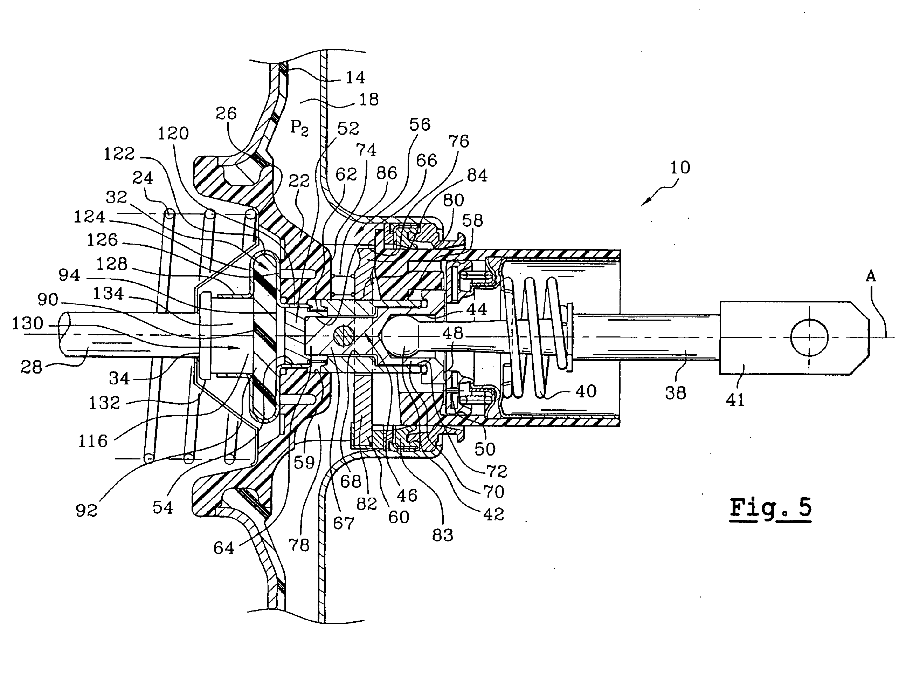

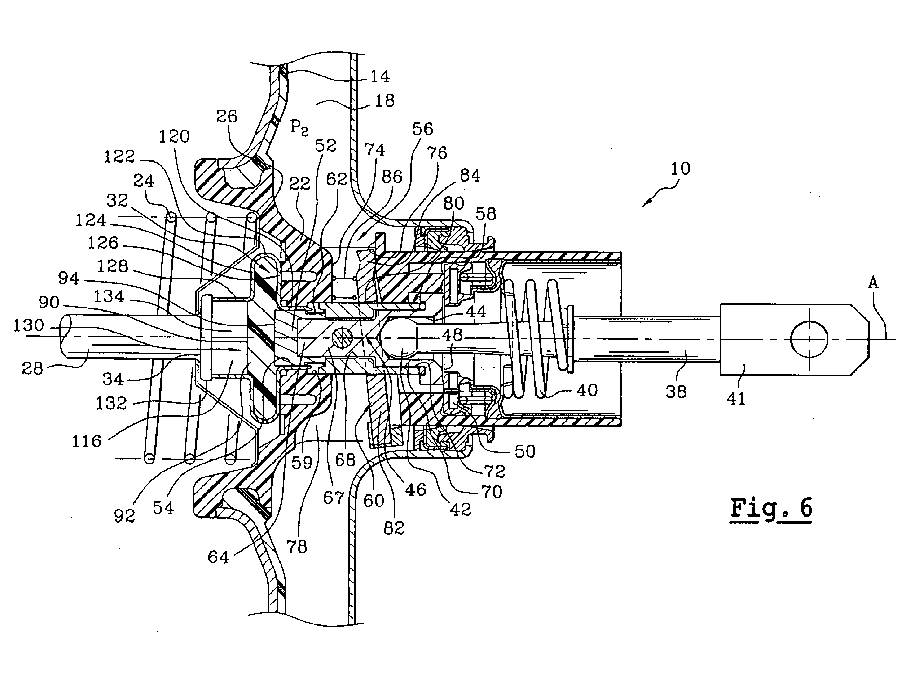

Une tige 38 de commande, qui est par exemple reliée à une pédale de frein du véhicule par l'intermédiaire d'un manchon 41 d'accouplement qui est agencé à son extrémité libre arrière, est susceptible de se déplacer dans le piston mobile 22, sélectivement en fonction d'un effort axial d'entrée exercé vers l'avant sur la tige 38 de commande. L'effort d'actionnement est exercé à l'encontre d'un effort de rappel produit sur la tige 38 par un ressort de rappel 40 qui est interposé entre le piston mobile 22 et la tige 38 de commande. A partir de sa position de repos représentée aux figures 2 et 5, la tige 38 est notamment mobile suivant une position d'actionnement intermédiaire (non représentée) ou une position d'actionnement extrême, représentée aux figures 3 et 6, qui est obtenue lorsque l'effort d'entrée est appliqué avec une intensité supérieure à une intensité dite "de saut" déterminée.

L'extrémité avant de la tige 38 de commande qui est opposée à son extrémité libre est conformée en rotule 42 et est reçue dans un logement 44 complémentaire d'un plongeur 46 sensiblement cylindrique qui est monté coulissant dans le piston mobile 22.

Comme l'illustrent plus particulièrement les figures 2, 3, 5 et 6, un siège annulaire arrière 48 du plongeur 46 fait partie d'un clapet 50 à trois voies qui est susceptible de faire varier la deuxième pression "P₂" régnant dans la chambre arrière 18, notamment en mettant en communication la chambre avant 16 et la chambre arrière 18 lorsque la tige 38 de commande est en position de repos, ou en mettant progressivement la chambre arrière 18 en communication avec la pression atmosphérique "Pₐ" lorsque la tige 38 de commande est actionnée.

Le fonctionnement du clapet à trois voies 50 étant connu de l'état de la technique, il ne sera pas décrit plus explicitement dans la présente description.

De manière connue, un palpeur 52 monté coulissant à l'extrémité avant du plongeur 46 est susceptible, dans la position extrême d'actionnement de la tige 38 de commande qui a été représentée aux figures 3 et 6, d'être sollicité par le plongeur 46 pour pénétrer dans le disque 32 de réaction déformable incompressible pour transmettre au plongeur 46 et à la tige 38 de commande l'effort de réaction du maître-cylindre.

De manière connue, le servomoteur 10 comporte un dispositif 56 d'embrayage unidirectionnel qui comporte une douille 58 coaxiale qui coulisse sur le plongeur 46, et une clé 60 sensiblement annulaire qui entoure avec jeu la douille 58 et qui est susceptible, lorsque l'effort d'entrée est appliqué avec une vitesse supérieure à une vitesse dite de saut déterminée ou comme représenté aux figures 3 et 6, d'être entraînée par le piston 22 de commande pour basculer autour d'un axe globalement transversal pour coopérer avec la périphérie de la douille 58 et pour la bloquer dans une position axiale avant extrême dans laquelle elle bloque le palpeur 52 indépendamment du plongeur 46 et de la tige 38 de commande.

Plus particulièrement, le palpeur 52 est monté coulissant dans un alésage 54 avant complémentaire réalisé dans le piston 22. Par ailleurs, la douille 58 est montée coulissante dans un alésage arrière 59 du piston 22 qui est d'un diamètre supérieur à son alésage 54 avant.

Des moyens élastiques, notamment un ressort 62, sont interposés entre une face transversale 65 de l'alésage arrière du piston 22 et une face avant de la douille 58 pour rappeler la douille 58 axialement vers l'arrière en butée contre le plongeur 46.

Un tronçon 64 d'extrémité libre avant du plongeur 46 est monté coulissant dans un alésage 66 du palpeur 52. Un tronçon intermédiaire 67 du plongeur 46 est monté dans un alésage 68 intermédiaire de la douille 58, et un tronçon arrière 70 du plongeur est monté dans un alésage arrière 72 de la douille 58 pour solliciter le palpeur 52 par l'intermédiaire de la douille 58 dans la position extrême d'actionnement de la tige 38 de commande.

De manière connue, la clé 60 est reçue avec jeu entre deux parois avant 74 et arrière 76 d'un évidement 78 qui traverse le piston 22 perpendiculairement par rapport à son axe "A".

La clé 60 comporte un anneau central qui est traversé par la douille 58 et dont une portée 80 cylindrique intérieure est destinée à bloquer la douille 58 par coincement.

A partir de cet anneau central s'étendent une branche 82 verticale inférieure, qui est destinée à prendre appui sur un élément fixe 83 de l'enveloppe dans la position de repos de la clé 60, et une branche 84 verticale supérieure, qui est rappelée élastiquement vers l'arrière par l'intermédiaire d'un ressort 86 en appui contre la paroi avant 74 de l'évidement 78, et qui est destinée à prendre appui sur la paroi arrière 76 de l'évidement dans la position de repos de la clé 60.

De la sorte, lorsqu'un effort d'entrée est appliqué d'arrière en avant suivant une course extrême de la tige de commande 38, et notamment avec une vitesse déterminée, la branche supérieure 84 de la clé 60 est entraînée par le piston 22 de commande tandis que sa branche inférieure 82 quitte son appui sur l'élément fixe 83. De ce fait, la clé 60 bascule autour d'un axe globalement transversal et dans le sens anti-horaire pour coopérer avec la périphérie de la douille 58. En particulier, lorsque l'effort d'entrée est appliqué avec une vitesse supérieure à la vitesse déterminée, le plongeur 46 repousse le palpeur 52 dans le disque de réaction 32.

Tant que le mouvement de la tige de commande 38 se poursuit d'arrière en avant et que celle-ci entraîne avec elle la douille 58 par l'intermédiaire du plongeur 46, l'effort appliqué sur la tige de commande 38 suffit à empêcher le blocage total de la douille 58, car il est plus élevé que l'effort exercé par le ressort 86 sur la clé 60.

En revanche, si le conducteur relâche prématurément son effort sur la tige 38, la douille 58 est bloquée par la clé 60 dans une position axiale avant extrême et de ce fait la face avant de la douille 58 bloque le palpeur 52 indépendamment du plongeur 46 et de la tige de commande 38, ce qui permet de maintenir un effort de freinage maximal tant que le retour de la tige 38 de commande n'a pas provoqué la réouverture du clapet à trois voies 50, et ainsi, le retour du piston 22 d'avant en arrière.

Suivant cette conception, le disque de réaction 32 est reçu dans la cage 30 déformable, qui est susceptible lorsque l'effort d'entrée est appliqué avec une intensité supérieure à un intensité prédéterminée de se déformer pour réduire l'effort de réaction transmis au palpeur 52 par l'intermédiaire de la face arrière 94 du disque de réaction 32.

Selon un premier mode de réalisation qui est représenté aux figures 2 et 3 la cage 30 comporte :
- un tronçon tubulaire arrière 96, qui est d'un premier diamètre intérieur déterminé correspondant au diamètre du disque de réaction 32 cylindrique qu'il reçoit, et qui est ouvert vers l'arrière,
- un tronçon tubulaire avant 98, qui est d'un deuxième diamètre intérieur déterminé inférieur au premier diamètre, qui est fermé à l'avant par la face avant 34, et qui est lié à la tige d'actionnement 28 du maître cylindre,
- une rondelle 100 rigide de butée, interposée avec jeu dans le tronçon tubulaire arrière 96 entre le disque 32 de réaction et une face d'épaulement 102 qui délimite le tronçon tubulaire avant et le tronçon tubulaire arrière, et qui comporte un perçage 104 d'un troisième diamètre intérieur déterminé inférieur au deuxième diamètre,
- un poussoir mobile 106, dont un tronçon avant 108 est monté coulissant avec jeu et est rappelé élastiquement vers l'arrière par l'intermédiaire d'un ressort 110 dans le tronçon tubulaire avant 98, dont une collerette externe 112 prend appui sur une face avant 114 de la rondelle rigide 100, dont un tronçon arrière 116 traverse le perçage 104 de la rondelle 100 rigide de butée et dont une face arrière, agencée au contact du disque de réaction, forme la paroi 90 mobile de la cage 30.

De la sorte, lorsque la tige de commande 38 est actionnée avec l'intensité supérieure à l'intensité déterminée et que le palpeur 52 pénètre dans le disque de réaction 32, celui-ci repousse le poussoir 106 en comprimant le ressort 110 selon une course associée à la raideur dudit ressort 110, ce qui crée dans la cage 30 un volume supplémentaire permettant la décompression locale de la partie avant 92 du disque 32 de réaction et de la sorte, l'effort de réaction transmis par la tige d'actionnement 28 au palpeur 52 par l'intermédiaire de la face arrière 94 du disque 32 de réaction se trouve réduit d'une manière significative.

Ainsi, cette configuration permet de modifier le rapport d'assistance lorsque l'intensité de l'effort d'entrée appliqué est supérieure à une valeur déterminée qui est fonction de la précharge du ressort 110. A partir de cette intensité, la précharge du ressort 110 est vaincue par un effort qui résulte de la pression interne du disque 32 de réaction et de la surface de celui-ci qui est au contact de la paroi 90 mobile. La pression interne du disque 32 de réaction est proportionnelle à la pression du maître cylindre, qui est elle même proportionnelle à l'effort d'entrée. De plus la distribution des pressions au sein du disque 32 de réaction est proportionnelle à la raideur du matériau élastomère dont est constitué le disque 32 de réaction.

Selon un second mode de réalisation qui est représenté aux figures 5 et 6, la cage 30 comporte :
- un tronçon tubulaire arrière 120 qui est d'un premier diamètre intérieur déterminé correspondant au diamètre du palpeur 52 qu'il reçoit, et qui ouvert vers l'arrière,
- un tronçon tubulaire intermédiaire 122 déformable élastiquement, qui est venu de matière avec le tronçon tubulaire arrière 120 et qui est d'un deuxième diamètre intérieur déterminé correspondant au diamètre du disque 32 de réaction qu'il enserre sans jeu entre deux faces transversales annulaires opposées 124 et 126,
- un tronçon tubulaire avant 128 d'un troisième diamètre intérieur déterminé, qui est venu de matière avec le tronçon tubulaire intermédiaire 122, qui est ouvert à l'avant,
- un poussoir tubulaire avant 130, qui est fermé à l'avant et à l'arrière, dont une partie avant 34 est liée à la tige 28 d'actionnement du maître cylindre 36 et comporte un épaulement 132 d'appui sur le tronçon 128 tubulaire avant, et dont une partie arrière 134, de diamètre extérieur correspondant au troisième diamètre intérieur déterminé, est montée coulissante dans le tronçon tubulaire avant 128 et comporte une face arrière, agencée au contact du disque 32 de réaction, qui forme la paroi mobile 90 de la cage 30.

De la sorte, lorsque la tige de commande 38 est actionnée avec l'intensité supérieure à l'intensité déterminée et que le palpeur 52 pénètre dans le disque de réaction 32, la pression interne qui règne au sein du disque 32 de réaction augmente ce qui a pour effet de déformer de manière élastique le tronçon tubulaire intermédiaire 122 qui joue le rôle de ressort. Ceci a pour effet de repousser le tronçon 128 tubulaire avant selon une course associée à la raideur du tronçon tubulaire intermédiaire 122 jusqu'à ce qu'il entre en contact avec l'épaulement 132 du poussoir 130. De ce fait, la surface d'application de la tige d'actionnement 28 devient égale à la surface du tronçon tubulaire intermédiaire 122 et de la sorte, l'effort de réaction transmis par la tige d'actionnement 28 au palpeur 52 par l'intermédiaire de la face arrière 94 du disque 32 de réaction se trouve réduit d'une manière significative.

Avantageusement, dans chacun des deux modes de réalisation, le disque 32 de réaction est réalisé en un matériau élastomère. Lors de la fabrication du servomoteur associé au second mode de réalisation, le matériau élastomère du disque 32 de réaction est vulcanisé dans le tronçon 122 tubulaire intermédiaire de la cage 30 de manière à adhérer avec ledit tronçon tubulaire intermédiaire 122, ce qui permet au disque 32 de réaction d'accompagner le mouvement dudit tronçon 122 tubulaire intermédiaire.

L'invention permet donc avantageusement de bénéficier d'un effort de freinage maximal dans des situations de freinage d'urgence, quel que soit le comportement du conducteur après un freinage violent, sans que l'effort de réaction transmis à la pédale par l'intermédiaire de la tige de commande 38 ne soit ressenti trop violemment par le conducteur et ne risque de conduire celui-ci à relâcher son effort de freinage.

## Revendications

1. Servomoteur (11) pour un véhicule automobile, du type qui comporte un servomoteur (10) pneumatique d'assistance au freinage actionnant un maître-cylindre (36), du type dans lequel le servomoteur (10) comporte une enveloppe (12) rigide à l'intérieur de laquelle est mobile une cloison (14) transversale délimitant de façon étanche une chambre avant (16), soumise à une première pression (P₁), et une chambre arrière (18) soumise à une deuxième pression (P₂) variant entre la première pression (P₁) et une pression (Pₐ) supérieure à la première pression (P₁), du type dans lequel le servomoteur (10) comporte un piston mobile (22) solidaire de la cloison mobile (14) et une tige (38) de commande se déplaçant dans le piston (22) sélectivement en fonction d'un effort axial d'entrée exercé vers l'avant à l'encontre d'un effort de rappel exercé sur la tige (38) par un ressort (40) de rappel, du type dans lequel la tige (38) est mobile suivant une position d'actionnement intermédiaire ou une position d'actionnement extrême obtenue lorsque l'effort d'entrée est appliqué avec une vitesse supérieure à une vitesse dite de saut déterminée ou avec une intensité supérieure à une intensité dite de saut déterminée, du type dans lequel le servomoteur (10) comporte un plongeur (46) qui est agencé à l'avant de la tige de commande (38) dans le piston (22) et un clapet (50) à trois voies qui comporte au moins un siège annulaire (48) arrière du plongeur (46) et qui est susceptible de faire varier la deuxième pression (P₂) régnant dans la chambre arrière (18), notamment en mettant en communication la chambre avant (16) et la chambre arrière (18) lorsque la tige (38) de commande est en position de repos ou en mettant progressivement la chambre arrière (18) en communication avec la pression (Pₐ) supérieure à la première pression (P₁) lorsque la tige (38) de commande est actionnée, du type dans lequel, dans la position extrême d'actionnement de la tige (38) de commande, un palpeur (52) monté coulissant à l'extrémité avant du plongeur (46) est sollicité par le plongeur (46) pour pénétrer dans un disque (32) de réaction déformable incompressible qui est solidaire d'une tige (28) d'actionnement du maître-cylindre (36), pour transmettre au plongeur (46) et à la tige (38) de commande l'effort de réaction du maître-cylindre (36), **caractérisé en ce que** le servomoteur (10) comporte un dispositif (56) d'embrayage unidirectionnel qui comporte une douille (58) coaxiale qui coulisse sur le plongeur (46), et une clé (60) sensiblement annulaire qui entoure avec jeu la douille (58) et qui est susceptible, lorsque l'effort d'entrée est appliqué avec une vitesse supérieure à vitesse dite de saut déterminée, d'être entraînée par le piston (22) de commande pour basculer autour d'un axe globalement transversal pour coopérer avec la périphérie de la douille (58) et pour la bloquer dans une position axiale avant extrême dans laquelle elle bloque le palpeur (52) indépendamment du plongeur (46) et de la tige (38) de commande,
**en ce que** le disque (32) de réaction est reçu dans une cage (30) déformable, qui est susceptible lorsque l'effort d'entrée est appliqué avec une intensité supérieure à l'intensité dite de saut déterminée de se déformer pour réduire l'effort de réaction transmis au palpeur (52) par l'intermédiaire de la face arrière (94) du disque (32) de réaction.

2. Servomoteur selon la revendication précédente **caractérisé en ce que** la cage (30) est fixée à la tige (28) d'actionnement du maître-cylindre, et dont au moins une paroi (90) mobile est susceptible, lorsque l'effort d'entrée est appliquée à la vitesse déterminée, de se déplacer pour créer dans la cage (30) un volume supplémentaire dans lequel une partie avant (92) du disque (32) de réaction est susceptible de s'expandre pour réduire l'effort de réaction transmis au palpeur (52) par l'intermédiaire de la face arrière (94) du disque (32) de réaction.

3. Servomoteur (11) selon la revendication précédente, **caractérisé en ce que** la cage (30) comporte :
- un tronçon (96) tubulaire arrière, qui est d'un premier diamètre intérieur déterminé correspondant au diamètre du disque (32) de réaction cylindrique qu'il reçoit, et qui est ouvert vers l'arrière,
- un tronçon (98) tubulaire avant, qui est d'un deuxième diamètre intérieur déterminé inférieur au premier diamètre, qui est fermé à l'avant, et qui est lié à la tige (28) d'actionnement du maître cylindre,
- une rondelle (100) rigide de butée, interposée avec jeu dans le tronçon (96) tubulaire arrière entre le disque (32) de réaction et une face d'épaulement (102) qui délimite le tronçon tubulaire avant (98) et le tronçon (96) tubulaire arrière, et qui comporte un perçage (104) d'un troisième diamètre intérieur déterminé inférieur au deuxième diamètre,
- un poussoir (106) mobile, dont un tronçon (108) avant est monté coulissant avec jeu et est rappelé élastiquement vers l'arrière dans le tronçon (98) tubulaire avant, dont une collerette externe (112) prend appui sur une face avant (114) de la rondelle rigide (100), dont un tronçon arrière (116) traverse le perçage (104) de la rondelle (100) rigide de butée et dont une face arrière, agencée au contact du disque de réaction, forme la paroi (90) mobile de la cage (30).

4. Servomoteur (11) selon la revendication 1, **caractérisé en ce que** la cage (30) comporte :
- un tronçon (120) tubulaire arrière qui est d'un premier diamètre intérieur déterminé correspondant au diamètre du palpeur (52) qu'il reçoit, et qui ouvert vers l'arrière,
- un tronçon (122) tubulaire intermédiaire déformable élastiquement, qui est venu de matière avec le tronçon (120) tubulaire arrière et qui est d'un deuxième diamètre intérieur déterminé correspondant au diamètre du disque (32) de réaction qu'il enserre sans jeu entre deux faces transversales (124, 126) annulaires opposées,
- un tronçon (128) tubulaire avant d'un troisième diamètre intérieur déterminé, qui est venu de matière avec le tronçon (122) tubulaire intermédiaire, qui est ouvert à l'avant,
- un poussoir tubulaire avant (130), qui est fermé à l'avant et à l'arrière, dont une partie avant (34) est liée à la tige (28) d'actionnement du maître cylindre (36) et comporte un épaulement (132) d'appui sur le tronçon (128) tubulaire avant, et dont une partie arrière (134), de diamètre extérieur correspondant au troisième diamètre intérieur déterminé, est montée coulissante dans le tronçon tubulaire avant (128) et comporte une face arrière, agencée au contact du disque (32) de réaction, qui forme la paroi mobile (90) de la cage (30).

5. Servomoteur (11) selon l'une quelconque des revendications précédentes, **caractérisé en ce que** le disque (32) de réaction est réalisé en un matériau élastomère.

6. Servomoteur (11) selon la revendication précédente prise en combinaison avec la revendication 3, **caractérisé en ce que**, lors de la fabrication du servomoteur (11), le matériau élastomère du disque (32) de réaction est vulcanisé dans le tronçon (122) tubulaire intermédiaire de la cage (30) de manière à adhérer avec ledit tronçon (122) tubulaire intermédiaire.

7. Servomoteur (11) selon l'une des revendications précédentes, **caractérisé en ce que** le palpeur (52) est monté coulissant dans un alésage avant (54) complémentaire du piston (22).

8. Servomoteur (11) selon la revendication précédente, **caractérisé en ce que** la douille (58) est montée coulissante dans un alésage arrière (59) du piston (22) qui est d'un diamètre supérieur à son alésage avant (54).

9. Servomoteur (11) selon l'une quelconque des revendications précédentes, **caractérisé en ce que** des moyens élastiques sont interposés entre une face transversale (65) de l'alésage (59) arrière du piston (22) et une face avant de la douille (58) pour rappeler la douille (58) axialement vers l'arrière en butée contre le plongeur (46).

10. Servomoteur (11) selon l'une quelconque des revendications précédentes, **caractérisé en ce qu**'un tronçon (64) d'extrémité libre avant du plongeur (46) est monté coulissant dans un alésage (66) du palpeur (52), en ce qu'un tronçon intermédiaire (67) du plongeur (46) est monté dans un alésage intermédiaire (68) de la douille (58), et en ce qu'un tronçon arrière (70) du plongeur (46) est monté dans un alésage arrière (72) de la douille (58) pour solliciter le palpeur (52) par l'intermédiaire de la douille (58) dans la position extrême d'actionnement de la tige (38) de commande.

11. Servomoteur (11) selon l'une quelconque des revendications précédentes, **caractérisé en ce que** la clé (60) est reçue avec jeu entre deux parois avant (74) et arrière (76) d'un évidement (78) qui traverse le piston (22) perpendiculairement par rapport à son axe (A) et **en ce qu'**elle comporte :
- un anneau central qui est traversé par la douille (60) et qui est destiné à bloquer la douille par coincement,
- une branche (82) verticale inférieure, qui s'étend à partir de l'anneau et qui est destinée à prendre appui sur un élément (83) fixe de l'enveloppe (12) dans la position de repos de la clé (60),
- une branche (84) verticale supérieure, qui s'étend à partir de l'anneau, qui est rappelée élastiquement vers l'arrière par l'intermédiaire d'un ressort (86) en appui contre la paroi avant (74) de l'évidement (78), et qui est destinée à prendre appui sur la paroi arrière (76) de l'évidement dans la position de repos de la clé (60).

## Claims

1. Servomotor (11) for a motor vehicle, of the type comprising a braking-assistance pneumatic servomotor (10) for the actuation of a master cylinder (36) ; of the type in which the servomotor (10) comprises a rigid casing (12), in which a transverse partition wall (14) is movable, thus defining in an airtight manner a front chamber (16) under a first pressure (P₁), and a rear chamber (18) under a second pressure (P₂), varying between the first pressure (P₁) and a pressure (Pₐ), which is higher than said first pressure (P₁) ; of the type in which the servomotor (10) comprises a moving piston (22) integral with the moving partition wall (14), and a control rod (38) moving inside the piston (22) in a selective manner as a function of an axial input force, exerted in the forward direction against a return force applied to the rod (38) by a return spring (40) ; of the type in which the control rod (38) is capable of being biased towards either an intermediate actuation position or an end actuation position, resulting from the applying of the input force at a speed, which is higher than a determined speed called the determined jump speed, or with an intensity, which is greater than a determined intensity called the determined jump intensity ; of the type in which the servomotor (10) comprises a plunger (46), arranged at the front part relative to the control rod (38) inside the piston (22), and a three-way valve (50) comprising at least one annular rear seat (48) of the plunger (46) and capable, when the control rod (38) is in the rest position, of varying the second pressure (P₂), prevailing within the rear chamber (18), in particular through the interconnection of the front chamber (16) with the rear chamber (18) or, when the control rod (38) is actuated, of gradually connecting the rear chamber (18) to the higher pressure (Pₐ) than said first pressure (P₁) ; of the type in which, in the end actuation position of the control rod (38), a finger (52), which is slidingly fitted at the front end of the plunger (46), is biased by the plunger (46) so as to penetrate an incompressible yet deformable reaction disk (32), which is integral with an actuating rod (28) of the master cylinder (36), so as to transmit the reaction force from the master cylinder (36) to the plunger (46) and to the control rod (38) ; **characterised in that** the servomotor (10) comprises a unidirectional clutch device (56), which comprises a coaxial sleeve (58) sliding on the plunger (46), and a substantially annular key (60), which surrounds the sleeve (58) with some clearance and which, when the input force is applied at a higher speed than the determined so-called jump speed, is capable of being driven by the piston (22) so as to rock about a generally transverse axis, in such a way that it may cooperate with the periphery of the sleeve (58) and thus lock it in an end front axial position, in which the finger (52) is locked, independently of the plunger (46) and of the control rod (38),
**in that** the reaction disk (32) is accommodated in a deformable cage (30) which, when the input force is applied with a greater intensity than the determined so-called jump intensity, is capable of becoming deformed so as to reduce the reaction force, which is transmitted to the finger (52) through the rear face (94) of the reaction disk (32).

2. Servomotor according to claim 1, **characterised in that** the cage (30) is attached to the actuating rod (28) of the master cylinder and at least one moving wall (90) of which is capable, when the input force is applied at the determined speed, of moving so as to form, inside the cage (30), a further volume in which a front portion (92) of the reaction disk (32) may expand in order to reduce the reaction force, which is transmitted to the finger (52) through the rear face (94) of the reaction disk (32).

3. Servomotor (11) according to the preceding claim, **characterised in that** the cage (30) comprises :
- a rear tubular section (96) having a first determined inner diameter, which corresponds to the diameter of the cylindrical reaction disk (32) accommodated in said section, which is open at its rear part ;
- a front tubular section (98) having a second determined inner diameter, which is smaller than the first diameter, such section being closed at its front part and connected to the actuating rod (28) of the master cylinder ;
- a rigid thrust washer (100), interposed with some clearance, inside the rear tubular section (96), between the reaction disk (32) and a shoulder-forming face (102), which delimits the front tubular section (98) and the rear tubular section (96), such washer comprising a hole (104) having a third determined inner diameter, which is smaller than the second diameter ;
- a moving tappet (106), a front section (108) of which is slidably fitted inside the front tubular section (98) with some clearance, and is resiliently biased rearwards in the latter, such tappet being provided with an outer flange (112) bearing on a front face (114) of the rigid washer (100), whereas a rear section (116) of the tappet traverses the hole (104) of the rigid thrust washer (100) and a rear face of the tappet, contacting the reaction disk, constitutes the moving wall (90) of the cage (30).

4. Servomotor (11) according to claim 1, **characterised in that** the cage (30) comprises :
- a rear tubular section (120) having a first determined inner diameter, which corresponds to the diameter of the finger (52) accommodated in it, said section being open at its rear part ;
- an intermediate tubular section (122), elastically deformable, made in one piece with the rear tubular section (120) and having a second determined inner diameter corresponding to that of the reaction disk (32) it encloses without any clearance between two opposite annular transverse faces (124, 126) ;
- a front tubular section (128) having a third determined inner diameter, said section being made in one piece with the intermediate tubular section (122) and being open at its front part ;
- a front tubular tappet (130), which is closed both at the front part and at the rear part, and a front portion (34) of which is connected to the actuating rod (28) of the master cylinder (36) and comprises a shoulder (132) bearing on the front tubular section (128), whereas a rear portion (134) of such tappet, the outer diameter of which corresponds to the third determined inner diameter, is slidably fitted inside the front tubular section (128) and comprises a rear face contacting the reaction disk (32), which constitutes the moving wall (90) of the cage (30).

5. Servomotor (11) according to any one of the preceding claims, **characterised in that** the reaction disk (32) is made of an elastomeric material.

6. Servomotor (11) according to the preceding claim when in combination with claim 3, **characterised in that**, in the course of the manufacturing of the servomotor (11), the elastomeric material of the reaction disk (32) is vulcanized in the intermediate tubular section (122) of the cage (30), so as to adhere to said intermediate tubular section (122).

7. Servomotor (11) according to one of the preceding claims, **characterised in that** the finger (52) is slidingly fitted inside a complementarily-shaped front bore (54) provided inside the piston (22).

8. Servomotor (11) according to the preceding claim, **characterised in that** the sleeve (58) is slidingly fitted inside a rear bore (59) provided inside the piston (22) and having a greater diameter than the front bore (54).

9. Servomotor (11) according to any one of the preceding claims, **characterised in that** resilient means are interposed between a transverse face (65) of the rear bore (59) provided in the piston (22), and a front face of the sleeve (58) so as to bias the sleeve (58) axially rearwards into abutment against the plunger (46).

10. Servomotor (11) according to any one of the preceding claims, **characterised in that** a free front end section (64) of the plunger (46) is slidingly fitted in a bore (66) provided in the finger (52), **in that** an intermediate section (67) of the plunger (46) is fitted in an intermediate bore (68) made in the sleeve (58), and **in that** a rear section (70) of the plunger (46) is fitted in a rear bore (72) provided in the sleeve (58) so as to bias the finger (52), through the sleeve (58), in the end actuation position of the control rod (38).

11. Servomotor (11) according to any one of the preceding claims, **characterised in that** the key (60) is accommodated with some clearance between a front wall (74) and a rear wall (76) of a cavity (78) traversing the piston (22), perpendicularly to the axis (A) of the latter, and **in that** it comprises :
- a ring-forming middle portion, which is traversed by the sleeve (58) and intended to lock the sleeve by a wedging action ;
- a lower vertical branch (82), extending from the ring-forming portion and intended to bear on a stationary element (83) of the casing (12), in the rest position of the key (60) ;
- an upper vertical branch (84), extending from the ring-forming portion and biased resiliently rearwards through a spring (86) seating on the front wall (74) of the cavity (78), said branch being intended to bear on the rear wall (76) of the cavity, in the rest position of the key (60).

## Patentansprüche

1. Servomotor (11) für ein Kraftfahrzeug, vom Typ, der einen pneumatischen Servomotor (10) zur Bremsunterstützung aufweist, der einen Hauptzylinder (36) betätigt, vom Typ, bei dem der Servomotor (10) ein starres Gehäuse (12) aufweist, in dem eine quer verlaufende Wand (14) beweglich ist, welche in dichter Weise eine vordere Kammer (16), die einem ersten Druck (P₁) ausgesetzt ist, und eine hintere Kammer (18) begrenzt, die einem zweiten Druck (P₂) ausgesetzt ist, der zwischen dem ersten Druck (P₁) und einem Druck (Pₐ) variiert, der höher ist als der erste Druck (P₁), vom Typ, bei dem der Servomotor (10) einen mit der beweglichen Wand (14) fest verbundenen beweglichen Kolben (22) und eine Steuerstange (38) aufweist, die sich im Kolben (22) selektiv in Abhängigkeit von einer axialen Eingangskraft verlagert, welche entgegen einer durch eine Rückstellfeder (40) auf die Stange (38) ausgeübten Rückstellkraft nach vorne ausgeübt wird, vom Typ, bei dem die Stange (38) entlang einer Betätigungszwischenstellung oder einer Betätigungsendstellung beweglich ist, die erreicht wird, wenn die Eingangskraft bei einer Geschwindigkeit aufgebracht wird, die höher ist als eine bestimmte sogenannte Sprunggeschwindigkeit, oder mit einer Intensität, die höher ist als eine bestimmte sogenannte Sprungintensität, vom Typ, bei dem der Servomotor (10) einen Tauchkolben (46), der im vorderen Teil der Steuerstange (38) im Kolben (22) angeordnet ist, und ein Dreiwegeventilelement (50) aufweist, das mindestens einen hinteren ringförmigen Sitz (48) des Tauchkolbens (46) aufweist und das den in der hinteren Kammer (18) herrschenden zweiten Druck (P₂) variieren kann, insbesondere indem die vordere Kammer (16) und die hintere Kammer (18) verbunden werden, wenn sich die Steuerstange (38) in der Ruhestellung befindet, oder indem allmählich die hintere Kammer (18) mit dem Druck (Pₐ), der höher ist als der erste Druck (P₁), verbunden wird, wenn die Steuerstange (38) betätigt wird, vom Typ, bei dem in der Betätigungsendstellung der Steuerstange (38) ein am vorderen Ende des Taucherkolbens (46) gleitend angebrachter Taster (52) von dem Tauchkolben (46) beaufschlagt wird, um in eine verformbare, nicht zusammendrückbare und fest mit einer Stange (28) zur Betätigung des Hauptzylinders (36) verbundene Reaktionsscheibe (32) zu dringen, um dem Tauchkolben (46) und der Steuerstange (38) die Reaktionskraft des Hauptzylinders (36) zu übertragen, **dadurch gekennzeichnet, dass** der Servomotor (10) eine in nur eine Richtung wirkende Kupplungsvorrichtung (56) aufweist, die eine auf dem Tauchkolben (46) gleitende koaxiale Hülse (58) und einen im Wesentlichen ringförmigen Schlüssel (60) aufweist, der die Hülse (58) mit Spiel umgibt und von dem Steuerkolben (22) mitgenommen werden kann, wenn die Eingangskraft bei einer Geschwindigkeit aufgebracht wird, die höher ist als eine bestimmte sogenannte Sprunggeschwindigkeit, so dass er um eine insgesamt quer verlaufende Achse kippt, um mit dem Umfang der Hülse (58) zusammenzuwirken und sie in einer axialen vorderen Endstellung zu blockieren, in welcher sie den Taster (52) unabhängig von dem Tauchkolben (46) und der Steuerstange (38) blockiert,
und **dass** die Reaktionsscheibe (32) in einem verformbaren Halter (30) aufgenommen ist, der sich verformen kann, wenn die Eingangskraft mit einer Intensität aufgebracht wird, die höher ist als die bestimmte sogenannte Sprungintensität, so dass die Reaktionskraft verringert wird, die mittels der hinteren Fläche (94) der Reaktionsscheibe (32) zum Taster (52) übertragen wird.

2. Servomotor nach dem vorhergehenden Anspruch, **dadurch gekennzeichnet, dass** der Halter (30) an der Stange (28) zur Betätigung des Hauptzylinders befestigt ist und mindestens eine bewegliche Wand (90) aufweist, die sich verlagern kann, wenn die Eingangskraft mit der bestimmten Geschwindigkeit aufgebracht wird, so dass im Halter (30) ein zusätzliches Volumen gebildet wird, in dem sich ein vorderer Teil (92) der Reaktionsscheibe (32) ausdehnen kann, um die Reaktionskraft zu verringern, die mittels der hinteren Fläche (94) der Reaktionsscheibe (32) zum Taster (52) übertragen wird.

3. Servomotor (11) nach dem vorhergehenden Anspruch, **dadurch gekennzeichnet, dass** der Halter (30) folgendes aufweist:
- einen röhrenförmigen hinteren Abschnitt (96), der einen ersten bestimmten Innendurchmesser aufweist, welcher dem Durchmesser der zylindrischen Reaktionsscheibe (32) entspricht, die er aufnimmt, und der nach hinten offen ist,
- einen röhrenförmigen vorderen Abschnitt (98), der einen zweiten bestimmten Innendurchmesser besitzt, welcher kleiner ist als der erste Durchmesser, der im vorderen Teil geschlossen und mit der Stange (28) zur Betätigung des Hauptzylinders verbunden ist,
- eine starre Anschlagscheibe (100), die mit Spiel im röhrenförmigen hinteren Abschnitt (96) zwischen der Reaktionsscheibe (32) und einer Absatzfläche (102) angeordnet ist, welche den röhrenförmigen vorderen Abschnitt (98) und den röhrenförmigen hinteren Abschnitt (96) begrenzt, und die eine Durchbohrung (104) mit einem dritten bestimmten Innendurchmesser aufweist, der kleiner ist als der zweite Durchmesser,
- einen beweglichen Stößel (106), bei dem ein vorderer Abschnitt (108) gleitend mit Spiel angebracht ist und elastisch nach hinten in den röhrenförmigen vorderen Abschnitt (98) zurückgestellt wird, bei dem ein Außenkragen (112) an einer vorderen Fläche (114) der starren Scheibe (100) anliegt, bei dem ein hinterer Abschnitt (116) die Durchbohrung (104) der starren Anschlagscheibe (100) durchquert und bei dem eine hintere Fläche, die so angeordnet ist, dass sie die Reaktionsscheibe berührt, die bewegliche Wand (90) des Halters (30) bildet.

4. Servomotor (11) nach Anspruch 1, **dadurch gekennzeichnet, dass** der Halter (30) folgendes aufweist:
- einen röhrenförmigen hinteren Abschnitt (120), der einen ersten bestimmten Innendurchmesser aufweist, welcher dem Durchmesser des Tasters (52) entspricht, den er aufnimmt, und der nach hinten offen ist,
- einen röhrenförmigen Zwischenabschnitt (122), der elastisch verformbar ist, einstückig mit dem röhrenförmigen hinteren Abschnitt (120) ausgebildet ist und einen zweiten bestimmten Innendurchmesser aufweist, der dem Durchmesser der Reaktionsscheibe (32) entspricht, die er ohne Spiel zwischen zwei ringförmigen, gegenüberliegenden Querflächen (124, 126) klemmt,
- einen röhrenförmigen vorderen Abschnitt (128), der einen dritten bestimmten Innendurchmesser besitzt, der einstückig mit dem röhrenförmigen Zwischenabschnitt (122) ausgebildet und im vorderen Teil offen ist,
- einen röhrenförmigen vorderen Stößel (130), der vorne und hinten geschlossen ist, bei dem ein vorderer Teil (34) mit der Stange (28) zur Betätigung des Hauptzylinders (36) verbunden ist und einen Absatz (132) zur Anlage an den röhrenförmigen vorderen Abschnitt (128) aufweist, und bei dem ein hinterer Teil (134), der einen Außendurchmesser besitzt, der dem dritten bestimmten Innendurchmesser entspricht, gleitend im röhrenförmigen vorderen Abschnitt (128) angebracht ist und eine hintere Fläche aufweist, die so angeordnet ist, dass sie die Reaktionsscheibe (32) berührt, und die die bewegliche Wand (90) des Halters (30) bildet.

5. Servomotor (11) nach einem der vorhergehenden Ansprüche, **dadurch gekennzeichnet, dass** die Reaktionsscheibe (32) aus einem Elastomermaterial hergestellt ist.

6. Servomotor (11) nach dem vorhergehenden Anspruch in Kombination mit Anspruch 3, **dadurch gekennzeichnet, dass** während der Herstellung des Servomotors (11) das Elastomermaterial der Reaktionsscheibe (32) im röhrenförmigen Zwischenabschnitt (122) des Halters (30) vulkanisiert wird, so dass es am röhrenförmigen Zwischenabschnitt (122) haftet.

7. Servomotor (11) nach einem der vorhergehenden Ansprüche, **dadurch gekennzeichnet, dass** der Taster (52) in einer komplementären vorderen Bohrung (54) des Kolbens (22) gleitend angebracht ist.

8. Servomotor (11) nach dem vorhergehenden Anspruch, **dadurch gekennzeichnet, dass** die Hülse (58) gleitend in einer hinteren Bohrung (59) des Kolbens (22) angebracht ist, welche einen größeren Durchmesser besitzt als dessen vordere Bohrung (54).

9. Servomotor (11) nach einem der vorhergehenden Ansprüche, **dadurch gekennzeichnet, dass** elastische Mittel zwischen einer quer verlaufenden Fläche (65) der hinteren Bohrung (59) des Kolbens (22) und einer vorderen Fläche der Hülse (58) angeordnet sind, um die Hülse (58) axial nach hinten in Anschlag gegen den Tauchkolben (46) zurückzustellen.

10. Servomotor (11) nach einem der vorhergehenden Ansprüche, **dadurch gekennzeichnet, dass** ein vorderer Abschnitt (64) mit einem freien Ende des Tauchkolbens (46) gleitend in einer Bohrung (66) des Tasters (52) angebracht ist, dass ein Zwischenabschnitt (67) des Tauchkolbens (46) in einer Zwischenbohrung (68) der Hülse (58) angebracht ist und dass ein hinterer Abschnitt (70) des Tauchkolbens (46) in einer hinteren Bohrung (72) der Hülse (58) angebracht ist, um den Taster (52) mittels der Hülse (58) in die Betätigungsendstellung der Steuerstange (38) zu beaufschlagen.

11. Servomotor (11) nach einem der vorhergehenden Ansprüche, **dadurch gekennzeichnet, dass** der Schlüssel (60) mit Spiel zwischen einer vorderen Wand (74) und einer hinteren Wand (76) einer Vertiefung (78) aufgenommen ist, die den Kolben (22) in Bezug auf seine Achse (A) senkrecht durchquert, und dass er folgendes aufweist:
- einen mittleren Ring, der von der Hülse (60) durchquert ist und die Hülse durch Klemmen blockieren soll,
- einen unteren senkrechten Arm (82), der sich ausgehend von dem Ring erstreckt und dazu bestimmt ist, in der Ruhestellung des Schlüssels (60) an einem festen Element (83) des Gehäuses (12) anzuliegen,
- einen oberen senkrechten Arm (84), der sich ausgehend von dem Ring erstreckt, der mittels einer Feder (86), die an der vorderen Wand (74) der Vertiefung (78) anliegt, elastisch nach hinten zurückgestellt wird, und der dazu bestimmt ist, in der Ruhestellung des Schlüssels (60) an der hinteren Wand (76) der Vertiefung anzuliegen.
